# EUROPÄISCHE PATENTSCHRIFT

(11) **EP 0 570 603 B1**
(45) Veröffentlichungstag und Bekanntmachung des Hinweises auf die Patenterteilung: **06.11.1996**
(21) Anmeldenummer: 92107992.7
(22) Anmeldetag: 12.05.1992
(51) Int. Cl.: H02H 1/04, H02H 3/33

(54) **Eigensicherer Differenzstromschutzschalter**
Fail safe differential current circuit-breaker
Disjoncteur à courant différentiel à sécurité intrinsèque

(43) Veröffentlichungstag der Anmeldung: 24.11.1993
(73) Patentinhaber: SIEMENS AKTIENGESELLSCHAFT, 80333 München (DE)
(72) Erfinder: Bauer, Bernhard, Dipl.-Ing. (FH), W-8401 Grossberg (DE); Kleemeier, Manfred, Dipl.-Ing. (FH), W-8402 Neutraubling (DE)

(56) Entgegenhaltungen:
- DE-A- 3 823 101
- US-A- 3 571 661

## Beschreibung

Die Erfindung bezieht sich auf einen netzspannungsabhängigen Differenzstrom (DI)-Schutzschalter, der zur Überwachung auf Fehlerstrom mit einem das Residuum der zu überwachenden Ströme bildenden Bauteil, insbesondere einem Summenstromwandler, und von einer eigensicheren Auswerteelektronik beaufschlagten Auslöserelais arbeitet, insbesondere nach Gattungsbegriff von Patentanspruch 1. Das Auslöserelais kann insbesondere ein Ruhestromrelais sein, das bei seinem Abfall auf die Entklinkungsvorrichtung eines Schaltschlosses und damit in Eingriffverbindung stehender Schaltkontakte in den zu überwachenden Leitungen einwirkt.

Netzspannungsunabhängige Fehlerstrom (FI)-Schutzschalter sind besonders sicher, da sie für ihren Betrieb nicht von der Netzspannung abhängig sind. DI-Schutzschalter mit einer aufwendigen Auswerteelektronik ermöglichen andererseits auch die Erfassung von glatten Gleichfehlerströmen. Pulsierende Fehlerströme mit Gleichstromanteilen können von beiden Schutzschalterarten erfaßt werden. Um die Sicherheit von DI-Schutzschaltern trotz der statistischen Ausfallwahrscheinlichkeit weiter zu erhöhen, hat man sogenannte eigensichere DI-Schutzschalter entwickelt. Hierbei ist sichergestellt, daß bei Ausfall von elektronischen Bauteilen, bei einem Leiterbruch oder bei Spannungsausfall der Schutzschalter abschaltet. Derartige Schutzschalter schalten nicht nur bei Spannungsausfall sondern auch schon beim Unterschreiten der für den Betrieb erforderlichen Spannung bereits aus.

Die Abschaltung bei Unterschreiten der Spannung und bei Netzspannungsausfall ist in vielen Fällen, auch bei Geräten, die an Hausinstallationsverteilungen angeschlossen sind, nicht hinzunehmen oder zumindest sehr störend.

Der Erfindung liegt die Aufgabe zugrunde, DI-Schutzschalter, insbesondere allstromsensitive DI-Schutzschalter, die eigensicher ausgeführt sind, so weiter zu entwickeln, daß bei einer Störung in der Netzspannung, insbesondere bei deren Ausfall, eine Fehlabschaltung vermieden wird.

Die Lösung der geschilderten Aufgabe erfolgt durch einen DI-Schutzschalter nach Patentanspruch 1. Danach ist ein z.B. als Ruhestromrelais ausgebildetes weiteres Auslöserelais, das vom ersten Auslöserelais und den einen Fehlerstrom ermittelnden Bauteilen unabhängig ist, vorgesehen, das auf die Entklinkung des Schaltschlosses arbeitet. Die Entklinkungsvorrichtung ist elektrisch oder mechanisch so ausgebildet , daß nur bei einseitigem Ansprechen durch eines der Auslöserelais eine Entklinkung des Schaltschlosses erfolgen kann. Bei einem Fehlerstrom kann nur ein Auslöserelais ansprechen, nämlich das von der Auswerteelektronik beaufschlagte. Bei Netzausfall sprechen dagegen beide Auslöserelais an, so daß in Verbindung mit der besonderen Ausführung der Entklinkungseinrichtung das Schaltschloß nicht entklinkt wird und die Kontakte in den zu überwachenden Leitern nicht geöffnet werden. Wenn die Spannung wieder anliegt, kann der DI-Schutzschalter daher weiter seine sichernde Funktion ausüben. Es sind daher keine Verbraucher länger als durch den Netzausfall bedingt ohne Stromversorgung, wobei wichtige Verbraucher ohnehin vorübergehend an ein Notstromaggregat angeschlossen sein können.

Es sind Auslöseeinrichtungen für Schutzschalter und Schutzeinrichtungen bekannt, die aus Gründen der Redundanz mit mehr als einem Auslösekreis arbeiten. So arbeitet bei einem derartigen bekannten Schutzschalter (DE-C-2 348 881) der Auslöser einer Baugruppe, die als Fehlerstromschutzschalter wirkt, auf ein Schaltschloß, auf das zugleich auch der Auslöser einer Baugruppe einwirkt, die als Differenzstromschutzschalter ausgeführt ist. Das Problem der Eigensicherheit und der dadurch bedingten Möglichkeit zur Fehlauslösung ist hierbei nicht angesprochen. Es ist andererseits eine redundante Auslöseeinrichtung für Schutzschalter und Schutzeinrichtungen bekannt (DE-A-3 823 101), die mit einem Auslöserelais nach dem Haltemagnet- oder Sperrmagnetprinzip arbeitet. Der Anker des Auslöserelais ist mit dem Anker eines Arbeitsrelais in Auslöserichtung gekoppelt, so daß FI- und DI-Baugruppen kombiniert werden können. Dadurch ist beim Ansprechen einer der Baugruppen bereits eine Auslösung sichergestellt. Auch hierbei ist die Eigensicherheit und die Möglichkeit zu Fehlauslösungen bei eigensicheren Schutzeinrichtungen bei Spannungsausfall nicht berührt.

Der DI-Schutzschalter nach der Erfindung kann mit einer Entklinkungseinrichtung versehen sein, die mit einem Doppelanker arbeitet, mit dessen Schenkel jeweils eine Auslösewicklung zweier als Ruhestromrelais ausgeführter Auslöserelais in Funktionsverbindung steht. Hierzu ist eine Entklinkungseinrichtung elektrisch oder mechanisch so ausgebildet, daß nur bei einseitigem Ansprechen durch eines der Auslöserelais eine Entklinkung des Schaltschlosses erfolgen kann.

Nach einem anderen Ausführungsbeispiel ist jedes der Auslöserelais von einem eigenen Netzteil gespeist, wobei nur eines der Auslöserelais über die Elektronik des DI-Schutzschalters und das andere Auslöserelais direkt von einem ihm zugeordneten Netzteil versorgt wird.

Die Erfindung soll nun anhand von in der Zeichnung grob schematisch wiedergegebenen Ausführungsbeispielen näher erläutert werden:
- In FIG 1: ist ein DI-Schutzschalter nach Art eines Blockschaltbilds wiedergegeben, der mit zwei Auslöserelais in der Ausführung als Ruhestromrelais arbeitet.
- In FIG 2: ist eine kombinierte Auslöseeinrichtung mit zwei Auslösespulen veranschaulicht, die auf einen Riegel zum Entklinken eines Schaltschlosses arbeitet.
- In FIG 3: ist ein DI-Schutzschalter dargestellt, der mit einer kombinierten Auslöseeinrichtung nach Art eines Tauchankers mit zwei Erregerwicklungen als Auslösespulen arbeitet.
- In FIG 4: ist ein DI-Schutzschalter wiedergegeben, der nach Art des in FIG 1 dargestellten aufgebaut ist, wobei man mit einem Netzteil für zwei Auslöserelais auskommt.

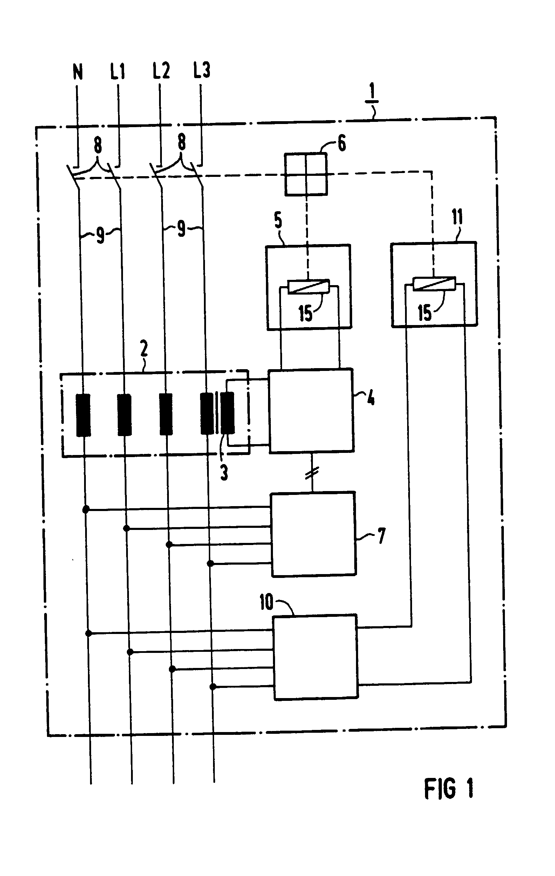

Der eigensichere DI-Schutzschalter 1 nach FIG 1 arbeitet mit einem Summenstromwandler 2 mit Sekundärwicklung 3, einer Auswerteelektronik 4, einem Auslöserelais 5 und einem Schaltschloß 6. Dieses steht in Wirkverbindung mit Schaltkontakten 8 in zu überwachenden Leitern 9, im Ausführungsbeispiel sind das der Neutralleiter N und die Außenleiter, früher Phasenleiter genannt, L1, L2 und L3. Ein erstes Netzteil 7 versorgt die Auswerteelektronik 4. Ein weiteres Netzteil 10 versorgt ein weiteres Auslöserelais 11, das ebenso wie das erste Auslöserelais 5 auf eine Entklinkungseinrichtung des Schaltschlosses 6 einwirkt. Die Entklinkungseinrichtung ist elektrisch oder mechanisch so ausgebildet, daß nur bei einseitigem Ansprechen durch eines der Auslöserelais eine Entklinkung des Schaltschlosses erfolgen kann. Das erste Auslöserelais 5 und das weitere Auslöserelais 11 sind nach gleicher Funktionsweise ausgeführt, insbesondere als Ruhestromrelais.

Wenn die Auslöserelais 5 und 11 als Ruhestromrelais ausgeführt sind, benötigt die Auswerteelektronik 4 keine besonderen Vorkehrungen, um eigensicher zu sein. In diese Eigensicherheit ist auch das erste Netzteil 7 einbezogen. Wenn in der Auswerteelektronik 4 oder im ersten Netzteil 7 ein Bauteil ausfällt oder eine andere Störung auftritt, beispielsweise eine Leitungsunterbrechung, fällt das Auslöserelais 5 ab und das Schaltschloß 6 wird aufgrund der besonderen Ausführung der Entklinkungseinrichtung wegen einseitiger Auslösung betätigt. Wenn andererseits die Netzspannung in den zu überwachenden Leitern 9 unter einen zulässigen Wert absinkt oder ausfällt, sprechen beide Auslöserelais 5 und 11 an, so daß infolge der besonderen Ausbildung der Entklinkungseinrichtung des Schaltschlosses 6 dieses nicht betätigt wird. Beim Wiedereinsetzen der Netzspannung werden beide Auslöserelais 5 und 11 bei Ausbildung als Ruhestromrelais wieder erregt, so daß das Schaltschloß unberührt bleibt und die Schaltkontakte 8 im geschlossenen Zustand verbleiben. Ein an den zu überwachenden Leitern 9 angeschlossener Verbraucher wird wieder mit Spannung versorgt. Empfindliche Geräte oder Einrichtungen, beispielsweise ein Gefrierschrank oder eine Kühltruhe, werden beim Wiedereintritt der Netzspannung ohne weiteres wieder versorgt. Andere empfindliche Einrichtungen werden in der Pause der Netzspannung ohnehin durch Notstrom versorgt.

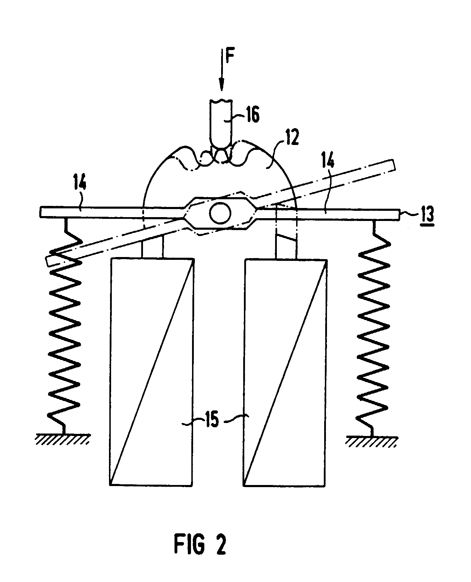

In FIG 2 ist eine Entklinkungseinrichtung 12 veranschaulicht, die mit einem Doppelanker 13 arbeitet. Mit den Schenkeln 14 des Doppelankers steht jeweils eine Auslösewicklung 15 zweier als Ruhestromrelais ausgeführter Auslöseeinrichtungen in Funktionsverbindung. Ein Entklinkungsriegel 16 kann seine Lage nur verändern, wenn die Entklinkungseinrichtung 12 ungleich, also nur von einer Auslösewicklung 15 beaufschlagt wird.

Wenn die Eigensicherheit der Auswerteelektronik 4 und der zugeordneten Bauteile in anderer Weise sichergestellt ist, kann anstelle von Ruhestromrelais auch ein anderes Auslöserelais eingesetzt werden, wenn dessen Beaufschlagung im Fall einer Störung anderweitig sichergestellt ist.

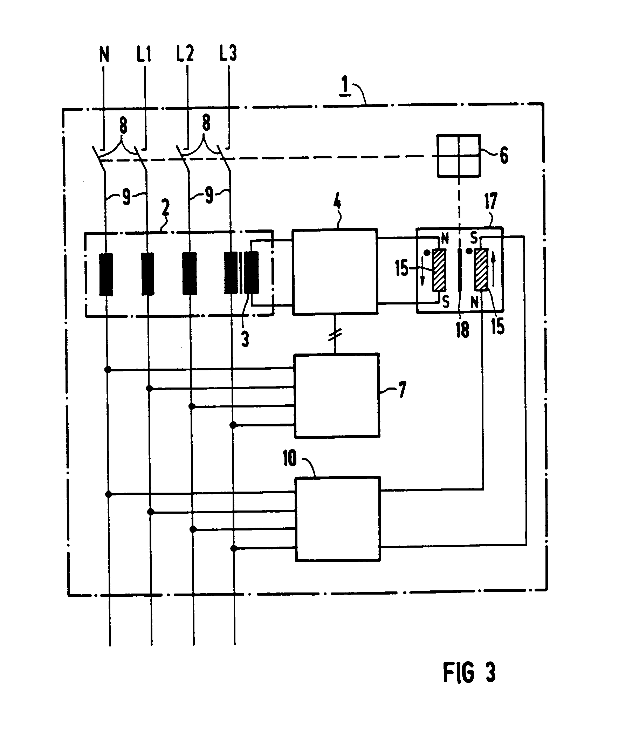

Der eigensichere DI-Schutzschalter nach FIG 3 arbeitet mit einer integrierten Auslöseeinrichtung 17 nach dem Tauchankerprinzip. Zwei Erregerwicklungen, von den jeweils eine als Auslösewicklung 15 in einem Auslösekreis einbezogen ist, weisen im Ausführungsbeispiel gleichen Wicklungssinn auf, sind jedoch elektrisch so angeschlossen, daß die Erregung hinsichtlich der Wirkung auf den Tauchanker gegensinnig ist. Fällt die Erregung in einer der als Auslösewicklung dienenden Erregerwicklungen aus, wird der Tauchanker 18 angezogen und das Schaltschloß entklinkt.

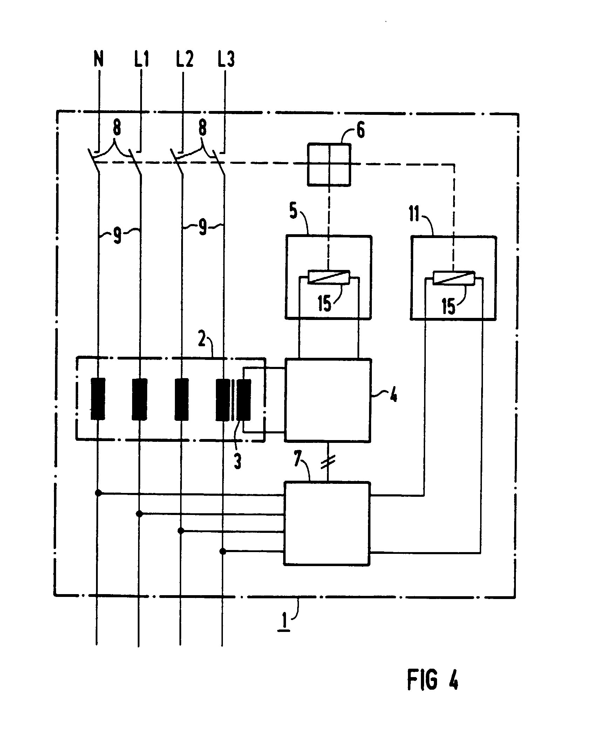

In Anwendungsfällen, in denen man nicht zu unterscheiden braucht, ob der DI-Schutzschalter wegen der an sich unwahrscheinlicheren Störung des Netzteil 7 oder wegen eines Spannungsausfalls in den zu überwachenden Leitern 9 angesprochen hat, kann man mit einem einzigen Netzteil auskommen, wie es in FIG 4 für einen im übrigen mit FIG 1 vergleichbarem Aufbau veranschaulicht ist.

## Patentansprüche

1. Netzspannungsabhängiger Differenzstrom (DI)-Schutzschalter (1) mit einem das Residuum der zu überwachenden Ströme bildenden Bauteil, insbesondere einem Summenstromwandler (2), zur Überwachung auf Fehlerstrom, einem von einer eigensicheren Auswerteelektronik (4) zur Ermittlung eines Fehlerstromes beaufschlagten ersten Auslöserelais (5), insbesondere einem Ruhestromrelais, und einer Entklinkungseinrichtung eines Schaltschlosses (6) und damit in Eingriffsverbindung stehenden Schaltkontakten (8) in zu überwachenden Leitern (9), wobei das Auslöserelais (5) bei seinem Abfall auf die Entklinkungseinrichtung einwirkt,
**dadurch gekennzeichnet**,
daß der Schutzschalter ein weiteres Auslöserelais (11) gleicher Funktion, also insbesondere ein Ruhestromrelais, aufweist, das vom ersten Auslöserelais (5) und den einen Fehlerstrom ermittelnden Bauteilen unabhängig auf die Entklinkungsvorrichtung (12) des Schaltschlosses (6) arbeitet, und daß bei einem Netzausfall beide Auslöserelais (5, 11) ansprechen, bei einem Fehlerstrom jedoch nur das erste Auslöserelais (5) anspricht, wobei die Entklinkungseinrichtung elektrisch oder mechanisch so ausgebildet ist, daß nur bei einseitigem Ansprechen durch eines der Auslöserelais (5, 11) eine Entklinkung des Schaltschlosses (6) erfolgen kann.

2. DI-Schutzschalter nach Anspruch 1,
**dadurch gekennzeichnet**,
daß die Entklinkungseinrichtung (12) mit einem Doppelanker (13) arbeitet, mit dessen Schenkel (14) jeweils eine Auslösewicklung (15) zweier als Ruhestromrelais ausgeführter Auslöserelais in Funktionsverbindung steht.

3. DI-Schutzschalter nach Anspruch 1,
**dadurch gekennzeichnet**,
daß die Auslöserelais (5, 11) dadurch Teil einer Auslöseeinrichtung nach dem Tauchankerprinzip sind, indem von zwei Erregerwicklungen (15) mit entgegengesetztem Wicklungssinn oder gegensinniger Erregung hinsichtlich der Wirkung auf den Tauchanker jeweils eine Erregerwicklung als Auslösewicklung (15) in einen Auslösekreis einbezogen ist.

4. DI-Schutzschalter nach einem der Ansprüche 1 bis 3,
**dadurch gekennzeichnet,**
daß jedes der Auslöserelais (5, 11) von einem eigenen Netzteil (7; 10) gespeist wird, wobei eines der Auslöserelais über die Auswerteelektronik (4) des DI-Schutzschalters und das andere Aulöserelais direkt von einem ihm zugeordneten Netzteil versorgt wird.

## Claims

1. Supply voltage-dependent differential-current circuit-breaker (1) having a component, in particular a summation current transformer (2), to monitor for fault current, which component establishes the residuum of the currents which are to be monitored, and having a first tripping relay (5), in particular a closed-circuit relay, upon which an intrinsically safe evaluating electronics unit (4) acts for the purpose of determining a fault current, and having an unlatching device pertaining to a latching mechanism (6) and switching contacts (8) operatively connected therewith in conductors (9) which are to be monitored, wherein the tripping relay (5) when released acts upon the unlatching device, characterised in that the circuit-breaker has a further tripping relay (11) of the same function, that is, in particular a closed-circuit relay, which, independently of the first tripping relay (5) and of the components which determine a fault current, operates on the unlatching arrangement (12) of the latching mechanism (6) and in that both tripping relays (5, 11) respond in the case of a supply failure, yet only the first tripping relay (5) responds in the case of a fault current, with the unlatching device being designed electrically or mechanically in such a way that only when there is one-sided response by one of the tripping relays (5, 11) is it possible for unlatching of the latching mechanism (6) to take place.

2. Differential-current circuit-breaker according to claim 1, characterised in that the unlatching device (12) operates with a double armature (13),
operationally connected with the limb (14) of which there is a respective trip winding (15) of two tripping relays which are realized as closed-circuit relays.

3. Differential-current circuit-breaker according to claim 1, characterised in that the tripping relays (5, 11) are part of a tripping device in accordance with the plunger armature principle owing to the fact that in each case an excitation winding from two excitation windings (15) with opposite winding sense or inverse excitation with regard to the effect upon the plunger armature is included as the trip winding (15) in a trip circuit.

4. Differential-current circuit-breaker according to one of the claims 1 to 3, characterised in that each of the tripping relays (5, 11) is fed by its own power supply unit (7; 10), with one of the tripping relays being supplied by way of the evaluating electronics unit (4) of the differential-current circuit-breaker and the other tripping relay being supplied direct from a power supply unit associated with it.

## Revendications

1. Disjoncteur (1) à courant différentiel (DI) disjonctant en fonction de la tension du réseau, comportant une partie constitutive formant le résidu des courants à surveiller, notamment un transformateur de courant totalisateur (2), qui est destiné à contrôleur s'il apparaît un courant de défaut, un premier relais de déclenchement (5), notamment un relais à courant de repos, qui est alimenté par un dispositif électronique d'exploitation (4) à sécurité intrinsèque destiné à la détermination d'un courant de défaut, et un dispositif de déverrouillage d'un verrou de maintien (6), avec lequel des contacts de coupure (8) dans des conducteurs (9) à surveiller sont en prise, le relais de déclenchement (5) agissant lors de sa retombée sur le dispositif de déverrouillage,
caractérisé en ce que,
le disjoncteur comporte un autre relais de déclenchement (11) de même fonction, donc notamment un relais à courant de repos, qui agit sur le dispositif de déverrouillage (12) du verrou de maintien (6) indépendamment du premier relais de déclenchement (5) et des parties constitutives déterminant un courant de défaut, et que les deux relais de déclenchement (5, 11) réagissent lors d'une défaillance du réseau, le premier relais de déclenchement (5) étant cependant le seul qui réagit lors d'un courant de défaut, le dispositif de déverrouillage étant agencé du point de vue électrique ou mécanique de telle sorte que le verrou de maintien (6) ne peut être déverrouillé que par la réponse d'un côté de l'un des relais de déclenchement (5, 11).

2. Disjoncteur DI selon la revendication 1,
caractérisé en ce que,
l e dispositif de déverrouillage (12) fonctionne avec une palette double (13), avec les branches (14) de laquelle est en liaison fonctionnelle un enroulement de déclenchement (15) de deux relais de déclenchement réalisés sous la forme de relais à courant de repos.

3. Disjoncteur DI selon la revendication 1,
caractérisé en ce que,
les relais de déclenchement (5, 11) font partie d'un dispositif de déclenchement fonctionnant selon le principe du noyau plongeur par le fait que, parmi deux enroulements d'excitation (15) bobinés en sens inverse ou excités en sens inverse en ce qui concerne l'action sur le noyau plongeur, un enroulement d'excitation est intégré à un circuit de déclenchement en tant qu'enroulement de déclenchement (15).

4. Disjoncteur DI selon l'une des revendications 1 à 3,
caractérisé en ce que,
chacun des relais de déclenchement (5, 11) est alimenté par un bloc d'alimentation (7 ; 10) qui lui est propre, l'un des relais de déclenchement étant alimenté par l'intermédiaire du dispositif électronique d'exploitation (4) du disjoncteur DI, et l'autre l'étant directement par un bloc d'alimentation qui lui est associé.
